# EUROPEAN PATENT APPLICATION

(11) **EP 4 205 938 A1**
(43) Date of publication of application: **05.07.2023**
(21) Application number: 21878000.5
(22) Date of filing: 06.10.2021
(51) Int. Cl.: B29C 43/36, H01M 50/116, B65B 47/04, B29L 31/00

(54) **APPARATUS AND METHOD FOR MOLDING BATTERY CASE, AND BATTERY CASE**

(30) Priority: 06.10.2020 KR 20200129026; 05.10.2021 KR 20210131992
(71) Applicant: LG Energy Solution, Ltd., Seoul 07335 (KR)
(72) Inventor: MIN, Min Kyu, Daejeon 34122 (KR); KIM, Hyun Beom, Daejeon 34122 (KR); KWON, Hyung Ho, Daejeon 34122 (KR)
(74) Representative: Plasseraud IP
(86) International application number: PCT/KR2021/013712
(87) International publication number: WO 2022/075749

(57) **Abstract**

An apparatus for molding a battery case according to an embodiment of the present invention for achieving the above object comprises: a die having a top surface, on which a pouch film is seated, and comprising at least one molding space formed to be recessed inward from the top surface; and a punch disposed above the molding space and descending to insert the pouch film into the molding space so as to mold the pouch film, wherein the top surface of the die comprises at least one die inclined surface.

## Description

### CROSS-REFERENCE TO RELATED APPLICATION

The present application claims the benefit of the priority of Korean Patent Application Nos. 10-2020-0129026, filed on October 06, 2020, and 10-2021-0131992, filed on October 05, 2021, which are hereby incorporated by reference in their entirety.

### TECHNICAL FIELD

The present invention relates to an apparatus and method for molding a battery case, and a battery case, and more particularly, to an apparatus and method for molding a battery case, in which, when forming a cup part by molding a pouch film, an outer wall of a cup part formed at a side of a folding part integrally connecting a first case to a second case is molded to be close to vertical.

### BACKGROUND ART

In general, secondary batteries comprise nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch type secondary battery and a can type secondary battery according to a material of a case accommodating the electrode assembly. In the pouch type secondary battery, an electrode assembly is accommodated in a pouch made of a flexible polymer material having a variable shape.

A pouch, which is a case of the pouch type secondary battery, is manufactured by forming a cup part by performing press processing on a pouch film having flexibility. In addition, when the cup part is formed, an electrode assembly is accommodated in an accommodation space of the cup part, and then, a side of the cup part is sealed to manufacture a secondary battery.

In the press processing, draw-molding is performed by inserting a pouch film into a molding device such as a press equipment and applying a pressure to the pouch film by using a punch to draw the pouch film. However, since a clearance exists between an inner wall of the molding space of the die and an outer wall of the punch, an outer wall of the cup part is formed with an inclination in the pouch-type battery case. Thus, there is a problem in that the space between the outer wall of the cup part and the electrode assembly increases. Particularly, if the outer wall of the cup part formed on a side of a folding part that integrally connects a first case to a second case of the battery case has an inclination, the outer wall of the cup part may be deformed in a later degassing process, and thus, a folding part-side punch edge may protrude to the outside to form an edge high phenomenon in which a height increases. Due to this edge high shape, an unnecessary thickness of the secondary battery increases, and thus, there is a problem in that energy density relative to volume is lowered.

### [PRIOR ART DOCUMENTS]

(Patent Document 1) Korea Patent Publication No. 2018-0055427

### DISCLOSURE OF THE INVENTION

### TECHNICAL PROBLEM

An object of the present invention for solving the above problem is to provide an apparatus and method for molding a battery case, in which, when forming a cup part by molding a pouch film, an outer wall of a cup part formed at a side of a folding part integrally connecting a first case to a second case is molded to be close to vertical, and a battery case.

The objects of the present invention are not limited to the aforementioned object, but other objects not described herein will be clearly understood by those skilled in the art from descriptions below.

### TECHNICAL SOLUTION

An apparatus for molding a battery case according to an embodiment of the present invention for achieving the above object comprises: a die having a top surface, on which a pouch film is seated, and comprising at least one molding space formed to be recessed inward from the top surface; and a punch disposed above the molding space and descending to insert the pouch film into the molding space so as to mold the pouch film, wherein the top surface of the die comprises at least one die inclined surface.

In addition, the die inclined surface may have an inclination that is inclined in a direction in which the punch descends.

In addition, the molding space may be formed to be recessed to the inside of the die from the die inclined surface.

In addition, the die inclined surface may comprise a first die inclined surface and a second die inclined surface, and the first die inclined surface and the second die inclined surface may be formed to be symmetrical to each other.

In addition, the first die inclined surface and the second die inclined surface may be inclinations that are inclined downward as being adjacent to each other.

In addition, the molding space may comprise: a first molding space formed to be recessed to the inside of the die from the first die inclined surface; and a second molding space formed to be recessed to the inside of the die from the second die inclined surface.

In addition, the die may further comprise a partition wall formed between the first molding space and the second molding space.

In addition, the partition wall may have a thickness that gradually increases toward a lower portion thereof, and an inner wall of the molding space formed by the partition wall may have an inclination.

In addition, the punch may have a groove, into which the partition wall is inserted, at a position corresponding to the partition wall.

In addition, the punch may comprise: a first molding part configured to insert the pouch film into the first molding space; and a second molding part configured to insert the pouch film into the second molding space.

In addition, the die may further comprise a die horizontal surface extending from at least one end of the die inclined surface and perpendicular to a direction in which the punch descends.

In addition, in the punch, a molding part that is in direct contact with the pouch film may have the same inclination as the die inclined surface.

In addition, the apparatus may further comprise a stripper disposed above the die, descending to be in contact with the die with the pouch film therebetween, and configured to fix the pouch film.

In addition, a bottom surface of the stripper may comprise at least one stripper inclined surface that is in contact with the die inclined surface and has the same inclination as the die inclined surface.

A method for molding a battery case according to an embodiment of the present invention for achieving the above problem comprises: seating a pouch film on a top surface of a die; allowing a punch, which is disposed above a molding space formed to be recessed inward from the top surface of the die, to descend in a direction that is inclined with respect to at least a portion of the top surface; and inserting the pouch film into the molding space by using the punch to form a cup part in the pouch film.

In addition, in the allowing of the punch to descend, the top surface of the die may comprise at least one inclined surface.

A battery case according to an embodiment of the present invention for achieving the above object comprises: a cup part formed in at least one of a first case or a second case and having an outer wall along an edge of one surface of a bottom portion to provide an accommodation space for an electrode assembly; and a folding part folded at one side of the cup part to integrally connect the first case to the second case, wherein the outer wall comprises: a first outer wall formed at a side of the folding part on the edge of the one surface of the bottom portion; a second outer wall formed at an opposite side of the first outer wall; a third outer wall formed to connect the first outer wall to the second outer wall; and a fourth outer wall formed at an opposite side of the third outer wall, wherein an inner inclined angle between the first outer wall and the bottom portion is formed in a range of 90° to 95°.

In addition, an inner inclined angle between the second outer wall and the bottom portion may be formed to be greater than that between the first outer wall and the bottom portion.

In addition, the inner inclined angle between the second outer wall and the bottom portion may be formed to be greater at least 10° or more than that between the first outer wall and the bottom portion.

Other particularities of the embodiments are comprised in the detailed description and drawings.

### ADVANTAGEOUS EFFECTS

According to the embodiments of the present invention, there are at least the following effects.

The angle of the inclination from the bottom portion of the outer wall of the cup part formed on the side of the folding part may be further reduced to be formed close to the vertical, and thus, the electrode assembly may be disposed very close to the outer wall of the cup part to reduce the unnecessary volume of the cup part.

In addition, even if the internal pressure of the cup part is reduced in the degassing process, the outer wall or the bottom portion of the cup part may be prevented from being deformed to prevent the edge high phenomenon from occurring.

In addition, the size of the bat ear may be reduced, and the problem that the shape of the bat ear stands out may be prevented.

The effects of the prevent invention are not limited by the aforementioned description, and thus, more varied effects are involved in this specification.

### BRIEF DESCRIPTION OF THE DRAWINGS

FIG. 1 is an assembled view of a secondary battery 1 according to an embodiment of the present invention;
FIG. 2 is a cross-sectional view of a pouch film 135 according to an embodiment of the present invention;
FIG. 3 is a perspective view of an apparatus 4 for molding a battery case according to a related art.
FIG. 4 is a schematic view of the apparatus 4 for molding the battery case according to the related art.
FIG. 5 is a schematic view illustrating a state in which a punch 43 descends according to the related art.
FIG. 6 is a partial enlarged view illustrating an punch edge 3334 of a cup part 333 according to the related art.
FIG. 7 is a partial enlarged view illustrating a folding part 339 of a secondary battery 3 according to the related art.
FIG. 8 is a schematic top view of the secondary battery 3 according to the related art.
FIG. 9 is a flowchart illustrating a method for manufacturing a battery case 13 by performing press processing on a pouch film 135 according to an embodiment of the present invention.
FIG. 10 is a perspective view of an apparatus 2 for molding the battery case according to an embodiment of the present invention.
FIG. 11 is a schematic view of the apparatus 2 for molding the battery case according to an embodiment of the present invention.
FIG. 12 is a schematic view illustrating a state in which a stripper 22 descends according to an embodiment of the present invention.
FIG. 13 is a schematic view illustrating a state in which a punch 23 descends according to an embodiment of the present invention.
FIG. 14 is a partial enlarged view illustrating a punch edge 1334 of a cup part 133 according to an embodiment of the present invention.
FIG. 15 is a partial enlarged view illustrating a folding part 139 of a secondary battery 1 according to an embodiment of the present invention.
FIG. 16 is a schematic top view illustrating the secondary battery 1 according to an embodiment of the present invention.
FIG. 17 is a perspective view of an apparatus 2a for molding a battery case according to another embodiment of the present invention.
FIG. 18 is a schematic view of the apparatus 2a for molding the battery case according to another embodiment of the present invention.
FIG. 19 is a schematic view illustrating a state in which a stripper 22a descends according to another embodiment of the present invention.
FIG. 20 is a schematic view illustrating a state in which a pouch 23a descends according to another embodiment of the present invention.
FIG. 21 is a partial enlarged view illustrating a punch edge 1334a of a cup part 133a according to another embodiment of the present invention.

### MODE FOR CARRYING OUT THE INVENTION

Advantages and features of the present invention, and implementation methods thereof will be clarified through following embodiments described with reference to the accompanying drawings. The present invention may, however be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless terms used in the present invention are defined differently, all terms (comprising technical and scientific terms) used herein have the same meaning as generally understood by those skilled in the art. Also, unless defined clearly and apparently in the description, the terms as defined in a commonly used dictionary are not ideally or excessively construed as having formal meaning.

In the following description, the technical terms are used only for explaining a specific exemplary embodiment while not limiting the present invention. In this specification, the terms of a singular form may comprise plural forms unless specifically mentioned. The meaning of "includes (comprises)" and/or "including (comprising)" does not exclude other components besides a mentioned component.

Hereinafter, preferred embodiments will be described in detail with reference to the accompanying drawings.

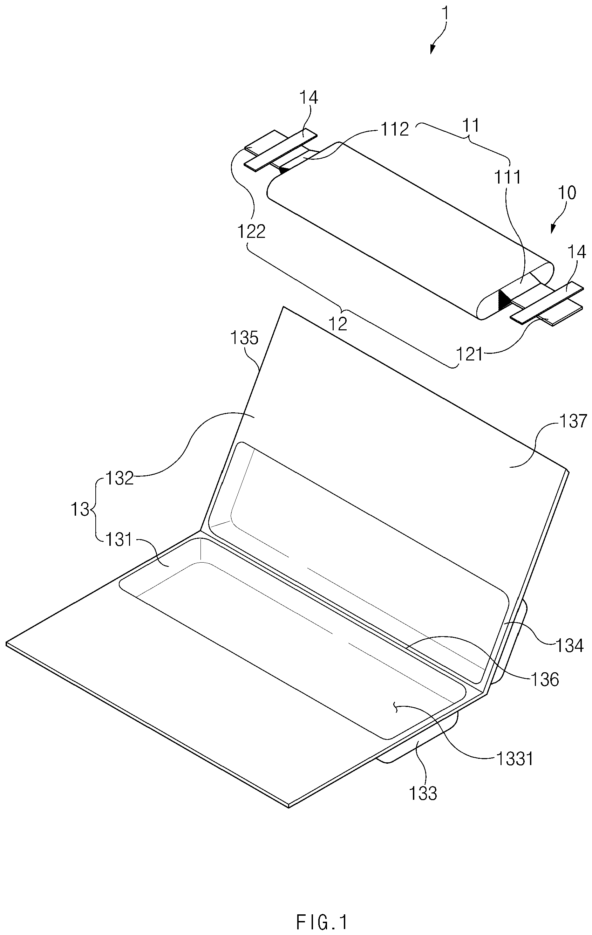

FIG. 1 is an assembled view of a secondary battery 1 according to an embodiment of the present invention;
An electrode assembly 10 is formed by alternately stacking electrodes and separators. First, slurry in which an electrode active material, a binder, and a plasticizer are mixed with each other is applied to a positive electrode collector and a negative electrode collector to manufacture the electrodes such as a positive electrode and a negative electrode. Then, respective separators are stacked between the electrodes to form the electrode assembly 10, the electrode assembly 10 is inserted into the battery case 13, and an electrolyte is injected to seal the battery case 13.

Specifically, the electrode assembly 10 comprises two types of electrodes, such as the positive electrode and the negative electrode, and the separator interposed between the electrodes to insulate the electrodes from each other. The electrode assembly 10 may be a stack type, a jelly roll type, a stacked and folding type, or the like. Each of the two types of electrodes, i.e., the positive electrode and the negative electrode has a structure in which active material slurry is applied to the electrode collector having a metal foil or metal mesh shape. The slurry may be usually formed by agitating a granular active material, an auxiliary conductor, a binder, and a plasticizer with a solvent added. The solvent may be removed in the subsequent process.

As illustrated in FIG. 1, the electrode assembly 10 comprises electrode tabs 11. The electrode tabs 11 are respectively connected to a positive electrode and a negative electrode of the electrode assembly 10 to protrude outward from the electrode assembly 10, thereby providing a path, through which electrons are moved, between the inside and outside of the electrode assembly 10. An electrode collector of the electrode assembly 10 is constituted by a portion coated with an electrode active material and a distal end, on which the electrode active material is not applied, i.e., a non-coating part. Also, each of an electrode tabs 11 may be formed by cutting the non-coating part or by connecting a separate conductive member to the non-coating part through ultrasonic welding. As illustrated in FIG. 1, the electrode tabs 11 may protrude in each of different directions of the electrode assembly 10, but is not limited thereto. For example, the electrode tabs may protrude in various directions, for example, protrude in parallel to each other from one side in the same direction.

In the electrode assembly 10, an electrode lead 12 that supplies electricity to the outside of the secondary battery 1 is connected to the electrode tab 11 through spot welding. Also, a portion of the electrode lead 12 is surrounded by an insulating part 14. The insulating part 14 may be disposed to be limited to a side 134, at which a first case 131 and a second case 132 of the battery case 13 are thermally fused, so that the electrode lead 12 is bonded to the battery case 13. Also, electricity generated from the electrode assembly 10 may be prevented from flowing to the battery case 13 through the electrode lead 12, and the sealing of the battery case 13 may be maintained. Thus, the insulating part 14 may be made of a nonconductor having non-conductivity, which is not electrically conductive. In general, although an insulation tape which is easily attached to the electrode lead 12 and has a relatively thin thickness is mainly used as the insulating part 14, the present invention is not limited thereto. For example, various members may be used as the insulating part 14 as long as the members are capable of insulating the electrode lead 12.

One end of the electrode lead 12 is connected to the electrode tab 11, and the other end of the electrode lead 12 protrudes to the outside of the battery case 13. That is, the electrode lead 12 comprises a cathode lead 121 having one end connected to a cathode tab 111 to extend in a direction in which the cathode tab 111 protrudes and an anode lead 122 having one end connected to an anode tab 112 to extend in a direction in which the anode tab 112 protrudes. On the other hand, as illustrated in FIG 1, all of the other ends of the positive electrode lead 121 and the negative electrode lead 122 protrude to the outside of the battery case 13. As a result, electricity generated in the electrode assembly 10 may be supplied to the outside. Also, since each of the positive electrode tab 111 and the negative electrode tab 112 is formed to protrude in various directions, each of the positive electrode lead 121 and the negative electrode lead 122 may extend in various directions.

The positive electrode lead 121 and the negative electrode lead 122 may be made of materials different from each other. That is, the cathode lead 121 may be made of the same material as the cathode collector, i.e., an aluminum (Al) material, and the anode lead 122 may be made of the same material as the anode collector, i.e., a copper (Cu) material or a copper material coated with nickel (Ni). Also, a portion of the electrode lead 12, which protrudes to the outside of the battery case 13, may be provided as a terminal part and electrically connected to an external terminal.

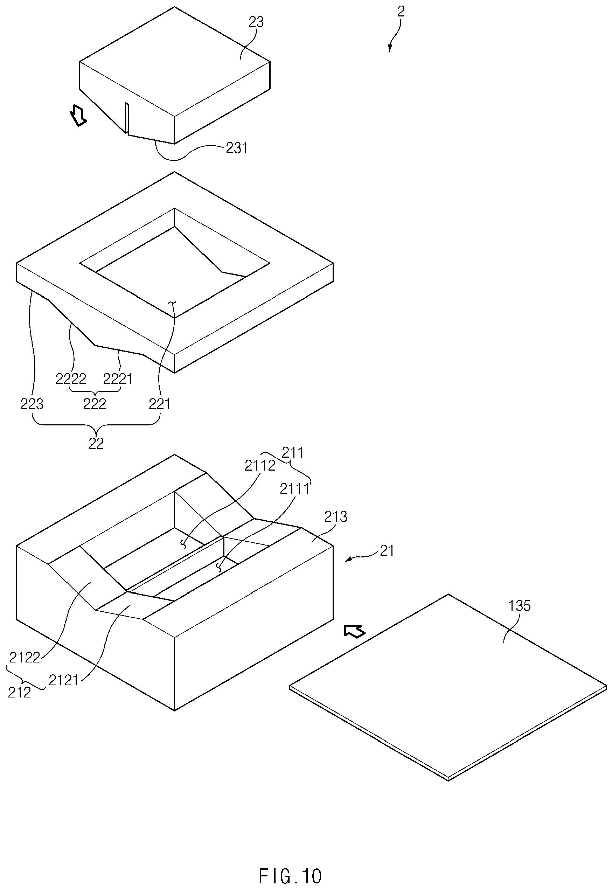

The battery case 13 is a pouch made of a flexible material, which accommodates the electrode assembly 10 therein. Hereinafter, the case in which the battery case 13 is the pouch will be described. When a pouch film 135 having flexibility is drawing-molded by using a punch 23 (see FIG. 10) or the like, a portion of the pouch film 135 is drawn to form the cup part 133 comprising a pocket-shaped accommodation space 1331, thereby manufacturing the battery case 13.

The battery case 13 accommodates the electrode assembly 10 so that a portion of the electrode lead 12 is exposed and then is sealed. As illustrated in FIG. 1, the battery case 13 comprises the first case 131 and the second case 132. The accommodation space 1331 in which the cup part 133 is formed to accommodate the electrode assembly 10 may be provided in the first case 131, and the second case 132 may cover an upper side of the accommodation space 1331 so that the electrode assembly 10 is not separated to the outside of the battery case 13. As illustrated in FIG. 1, one side of the first case 131 and one side of the second case 132 may be connected to each other. However, the present invention is not limited thereto. For example, the first case 131 and the second case 132 may be separately manufactured to be separated from each other.

When the cup part 133 is molded in the pouch film 135, only one cup part 133 may be formed in one pouch film 135, but the present invention is not limited thereto. For example, two cup parts may be drawing-molded to be adjacent to each other in one pouch film 135. Then, as illustrated in FIG. 1, the cup parts 133 are formed in the first case 131 and the second case 132, respectively. Here, each of the cup parts 133, which are respectively formed in the first case 131 and the second case 132, may have the same depth D, but is not limited thereto, and may have different depths D. After accommodating the electrode assembly 10 in the accommodation space 1331 provided in the cup part 133 of the first case 131, the battery case 13 may be folded with respect to a bridge 136 formed between the two cup parts 133 in the battery case 13 so that the two cup parts 133 face each other. Then, the cup part 133 of the second case 132 also accommodates the electrode assembly 10 from the upper side thereof. Accordingly, since the two cup parts 133 accommodate one electrode assembly 10, the electrode assembly 10 having a thicker thickness may be accommodated when compared to a case in which one cup part 133 is provided. In addition, since the first case 131 and the second case 132 are integrally connected to each other by folding the battery case 13, the number of sides 134 to be sealed when a sealing process is performed later may be reduced. Thus, a process rate may be improved, and the number of sealing processes may be reduced.

The battery case 13 may comprise the cup part 133, in which the accommodation space 1331 accommodating the electrode assembly 10 is provided, and a degassing part 137 formed at a side portion of the cup part 133 to discharge a gas generated in the cup part 133 through a degassing hole H. When the electrode assembly 10 is accommodated in the cup part 133 of the battery case 13, and the electrolyte is injected, and then an activation process is performed, a gas is generated inside the battery case 13. After performing a degassing process by punching a degassing hole in the degassing part 137 to discharge the gas to the outside, the degassing part 137 may be sealed and cut to be removed.

When the electrode lead 12 is connected to the electrode tab 11 of the electrode assembly 10, and the insulating part 14 is formed on a portion of the electrode lead 12, the electrode assembly 10 is accommodated in the accommodation space 1331 provided in the cup part 133 of the first case 131, and the second case 132 covers the accommodation space from the upper side. Also, the electrolyte is injected into the accommodation space, and the side 134 extending to the outside of the cup part 133 of each of the first case 131 and the second case 132 is sealed. The electrolyte may move lithium ions generated by electrochemical reaction of the electrode during charging and discharging of the secondary battery 1. The electrolyte may comprise a nonaqueous organic electrolyte that is a mixture of a lithium salt and a high-purity organic solvent or a polymer using a polymer electrolyte. Furthermore, the electrolyte may comprise a sulfide-based, oxide-based, or polymer-based solid electrolyte, and the solid electrolyte may have flexibility that is easily deformed by external force. The pouch type secondary battery 1 may be manufactured through the above-described method.

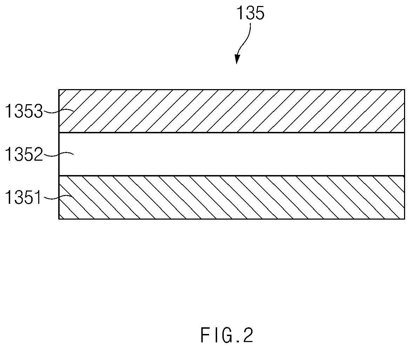

FIG. 2 is a cross-sectional view of a pouch film 135 according to an embodiment of the present invention;
The pouch that is the battery case 13 of the pouch type secondary battery 1 according to an embodiment of the present invention may be manufactured by drawing the pouch film 135. That is, the pouch film 135 is drawn by using the punch 23 or the like to form the cup part 133, thereby manufacturing the battery case 13. According to an embodiment of the present invention, as illustrated in FIG. 2, the pouch film 135 comprises a sealant layer 1351, a moisture barrier layer 1352, and a surface protection layer 1353.

The sealant layer 1351 may be made of the first polymer and be formed at the innermost layer to be in direct contact with the electrode assembly 10. Here, the innermost layer represents a layer disposed at the last when oriented in a direction opposite to the direction in which the electrode assembly 10 is disposed with respect to the moisture barrier layer 1352. The battery case 13 may be manufactured while a portion of the pouch film 135 is drawn to form the cup part 133 comprising the accommodation space 1331 having the pocket shape when the pouch film 135 having the stacked structure as described above is drawing-molded by using the punch 23 or the like. Also, when the electrode assembly 10 is accommodated in the accommodation space 1331, the electrolyte is injected. Thereafter, when the first case 131 and the second case 132 are in contact with each other so as to face each other, and thermal compression is applied to the side 134, the sealant layers 1351 are bonded to each other to seal the battery case 13. Here, since the sealant layer 1351 is in direct contact with the electrode assembly 10, the sealant layer 23 has to have insulating properties. Also, since the sealant layer 23 is in contact with the electrolyte, the sealant layer 23 has to have corrosion resistance. Also, since the inside of the battery case 13 is completely sealed to prevent materials from moving between the inside and outside of the battery case 13, high sealability has to be realized. That is, the side 134 in which the sealant layers 1351 are bonded to each other should have superior thermal bonding strength. In general, the first polymer forming the sealant layer 1351 may comprise one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, a polyolefin-based resin such as polypropylene (PP) or polyethylene (PE) is used for the sealant layer 23. Polypropylene (PP) is excellent in mechanical properties such as tensile strength, rigidity, surface hardness, abrasion resistance, and heat resistance and chemical properties such as corrosion resistance and thus is mainly used for manufacturing the sealant layer 1351. Furthermore, the sealant layer 23 may be made of a casted polypropylene, an acid modified polypropylene, or a polypropylene-butylene-ethylene terpolymer. Here, the acid-treated polypropylene may be maleic anhydride polypropylene (MAH PP). Also, the sealant layer 1351 may have a single layer structure made of one material or a composite layer structure in which two or more materials are respectively formed as layers.

The moisture barrier layer 1352 is stacked between the surface protection layer 1353 and the sealant layer 1351 to secure mechanical strength of the pouch, block introduction and discharge of a gas or moisture outside the secondary battery 1, and prevent the electrolyte from leaking. The moisture barrier layer 1352 may be made of a metal, in particular, a metal comprising an aluminum alloy. Aluminum may secure the mechanical strength having a predetermined level or more, but be light in weight. Thus, aluminum may secure complement and heat dissipation for electrochemical properties due to the electrode assembly 10 and the electrolyte. The aluminum alloy may comprise a variety of materials. For example, one or more kinds of materials selected from the group consisting of iron (Fe), copper (Cu), chromium (Cr), manganese (Mn), nickel (Ni), magnesium (Mg), and zinc (Zn). Here, the moisture barrier layer 1352 is made of a material containing iron, the mechanical strength may be improved. When the gas barrier layer 1351 is made of a material containing aluminum, flexibility may be improved. Thus, the material forming the gas barrier layer 1351 may be used in consideration of the characteristics of the gas barrier layer 1351.

The surface protection layer 1353 is made of the second polymer and formed at the outermost layer to protect the secondary battery 1 against external friction and collision and also electrically insulates the electrode assembly 10 from the outside. Here, the outermost layer represents a layer disposed at the last when oriented in a direction opposite to the direction in which the electrode assembly 10 is disposed with respect to the moisture barrier layer 1352. The second polymer forming the surface protection layer 1353 may comprise one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, a polymer such as polyethylene terephthalate (PET) having abrasion resistance and heat resistance may be used mainly. Also, the surface protection layer 1353 may have a single layer structure made of one material or a composite layer structure in which two or more materials are respectively formed as layers.

Although PET is inexpensive, has excellent durability, and has excellent electrical insulation, the PET has poor adhesiveness with respect to aluminum, which is frequently used for the moisture barrier layer 1352, and also, a behavior when the PET is stretched by applying stress is different. Thus, when the surface protection layer 1353 and the moisture barrier layer 1352 are directly bonded to each other, the protection layer 1353 and the moisture barrier layer 1352 may be delaminated during the draw-molding. As a result, the moisture barrier layer 1352 is not uniformly drawn to cause the deterioration in moldability.

According to an embodiment of the present invention, the battery case 13 may be made of a third polymer and further comprise a drawing assistance layer (not shown) that is stacked between the surface protection layer 1353 and the moisture barrier layer 1352. The drawing assistance layer stacked between the surface protection layer 1352 and the moisture barrier layer 1352 to prevent the surface protection layer 1353 and the moisture barrier layer 1352 from being delaminated when the surface protection layer 1352 and the moisture barrier layer 1352 are drawn. The third polymer forming the drawing assistance layer may comprise one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, since a nylon resin easily adheres to polyethylene terephthalate (PET) of the surface protection layer 1352, and a behavior when being stretched is similar to that of an aluminum alloy of the moisture barrier layer 1352, it is preferable that the nylon resin is mainly used. Also, the drawing assistance layer may have a single layer structure made of one material or a composite layer structure in which two or more materials are respectively formed as layers.

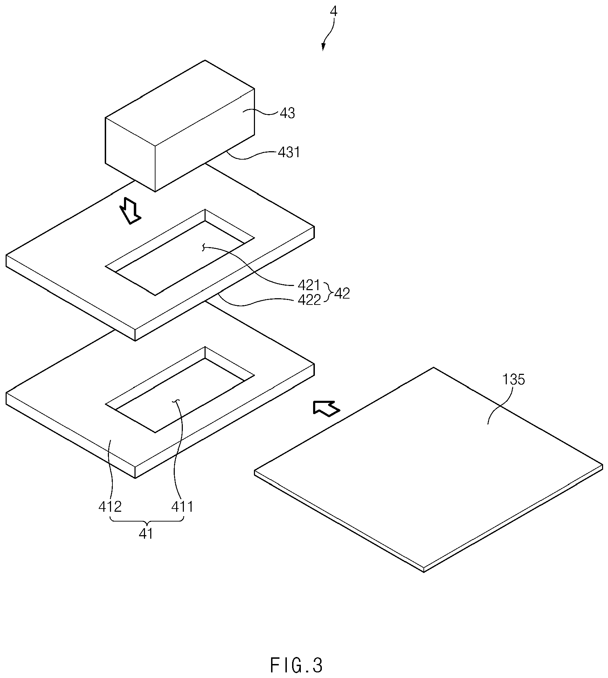

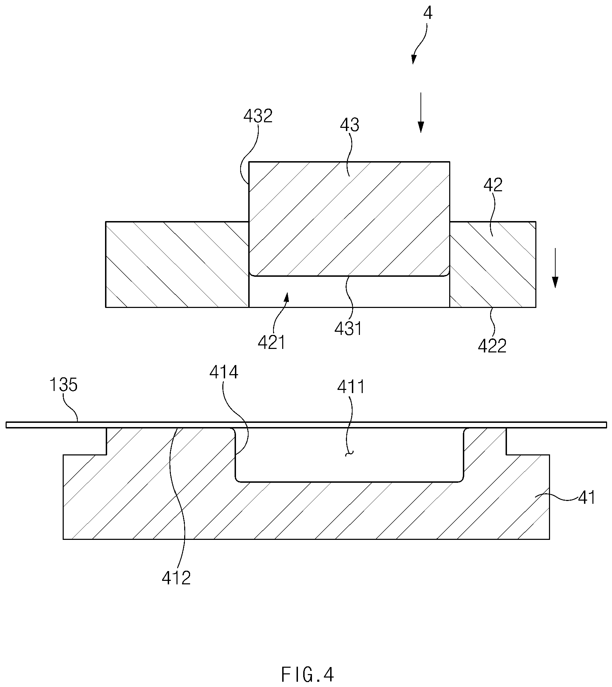

FIG. 3 is a perspective view of an apparatus 4 for molding a battery case according to a related art, and FIG. 4 is a schematic view of the apparatus 4 for molding the battery case according to the related art.

As illustrated in FIGS. 3 and 4, the apparatus 4 for molding the battery case according to the related art comprises: a die 41 on which a pouch film 135 is seated on a top surface 412 thereof and which comprises a molding space 411 formed to be recessed inward from the top surface 412; a stripper 42 which is disposed above the die 41 and is in contact with the die 41 with the pouch film 135 therebetween when descending to fix the pouch film 135; and a punch 43 which is disposed above the molding space 411 and at a central portion of the stripper 42 and descends to insert the pouch film 135 into the molding space 411 so as to mold the pouch film 135.

First, as illustrated in FIG. 4, the pouch film 135 having flexibility is seated on a top surface 412 of the die 41. Here, the pouch film 135 is seated on the top surface 412 of the die 41 so that the molding space 411 is disposed in a region in which the cup part 333 will be formed later. According to the related art, the top surface 412 of the die 41 is formed horizontally with respect to the ground surface. Thus, the pouch film 135 is also mounted on the top surface 412 of the die 41 in parallel to the ground surface.

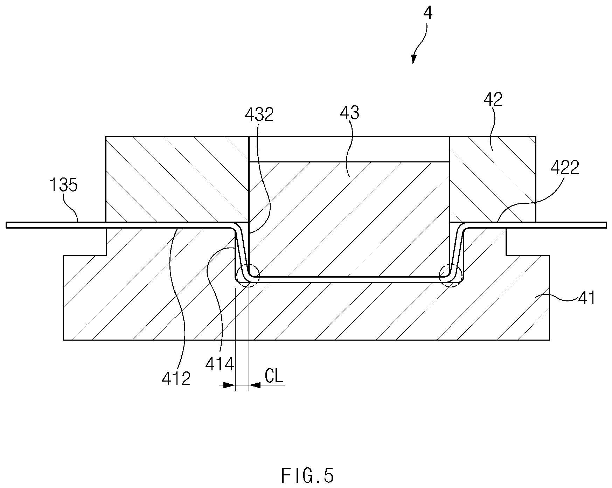

FIG. 5 is a schematic view illustrating a state in which the punch 43 descends according to the related art.

As illustrated in FIG. 5, the stripper 42 is disposed above the die 41 to descend when the pouch film 135 is seated on the top surface 412 of the die 21. Also, the stripper 41 contacts the die 21 with the pouch film 135 therebetween and presses the pouch film 135 upward to fix the pouch film 134.

The punch 43 descends at a predetermined pressure and at a predetermined speed to apply a pressure to the top surface of the pouch film 135 seated on the die 41, thereby stretching the pouch film 135. Thus, the cup part 333 may be formed in the pouch film 135 to manufacture the pouch-type battery case 33.

The punch 43 has a shape and size corresponding to those of the molding space 411 of the die 41. Here, that the shapes of the punch 43 and the molding space 411 correspond to each other means that the punch 43 and the molding space 411 of the die 41 have the same as or similar to each other, and when the pouch film 135 is stretched to form the cup part 333, the cup part 333 has a shape that is the same as or similar to that of each of the punch 23 and the molding space 411 of the die 41. Also, the corresponding size means that the punch 43 is inserted into the molding space 411 of the die 41 together with the pouch film 135 and stretches the pouch film 135, and thus, the punch 43 is finally less a clearance CL than that of the molding space 311 of the die 41.

The clearance CL refers to a horizontal distance between an inner wall 414 of the molding space 411 of the die 41 and the outer wall 3333 of the punch 43. Actually, there is a fine difference in size between the molding space 411 of the die 41 and the punch 43 as much as the clearance CL. If the clearance CL is excessively small, the distance between the inner wall of the molding space 411 and the outer wall of the punch 43 is excessively small. Then, the pouch film 135 may not be inserted into the molding space 411, or the pouch film 135 may be damaged due to large friction.

According to the related art, a bottom surface 422 of the stripper 42 and a molding part 431 of the punch 43 are also formed horizontally with respect to the ground surface. Thus, when the cup part 333 is formed by molding the pouch film 135, a bottom portion 3332 of the cup part 333 is also formed horizontally with the ground surface.

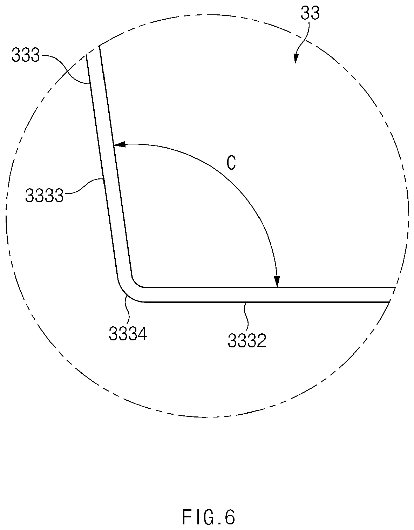

FIG. 6 is a partial enlarged view illustrating an punch edge 3334 of a cup part 333 according to the related art.

In the battery case 33, an edge of the cup part 333 comprises various types of edges such as a punch edge 3334, a die edge, and a thickness edge. Among them, the punch edge 3334 is formed to correspond to the edge of the punch 43 and connects each of a plurality of outer walls 3333 surrounding a periphery of the cup part 333 to the bottom portion 3332.

The clearance CL, which is the horizontal distance between the inner wall 414 of the molding space 411 of the die 41 and the outer wall 432 of the punch 43, may be referred to as a horizontal distance between an upper end of the outer wall 3333 of the cup part 333 and a boundary point between the punch edge 3334 and the outer wall 3333 of the cup part 333 in the battery case 33. However, as described above, as the clearance CL increases, the inclination angle C of the outer wall 3333 of the cup part 333 from the bottom portion 3332 in the pouch-type battery case 33 increases. Thus, there is a problem that a space between the outer wall 3333 of the cup part 333 and the electrode assembly 10 increases. Actually, even if this clearance CL is minimized, according to the related art, the inclination angle C of the outer wall 3333 of the cup part 333 from the bottom portion 3332 is 95° or less, and there is a limit to be molded close to vertical.

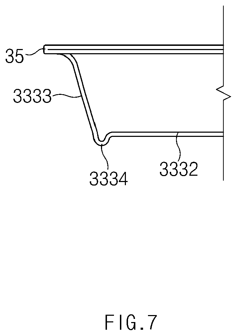

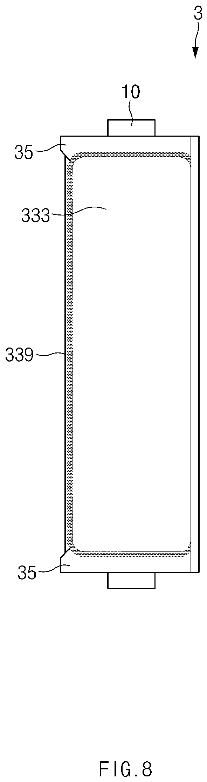

FIG. 7 is a partial enlarged view illustrating a folding part 339 of a secondary battery 3 according to the related art, and FIG. 8 is a schematic top view of the secondary battery 3 according to the related art.

When a degassing process is performed in the secondary battery 3, as a gas is discharged from the inside of the battery case 33 to the outside, an internal pressure of the cup part 333 is reduced. Thus, according to the related art, in order to reduce the volume of the space between the outer wall 3333 of the cup part 333 and the electrode assembly 10 while the internal pressure of the cup part 333 is reduced, the outer wall 3333 of the cup part 333 or the bottom portion 3332 may be deformed. Particularly, as illustrated in FIG. 7, as the folding part 339-side outer wall 3333 of the secondary battery 3 is recessed inward, an edge high phenomenon, in which the folding part 339-side punch edge 3334 of the cup part 333 protrudes outward to increase in height, may occur. Due to this edge high phenomenon, an unnecessary thickness of the secondary battery 3 increases, and thus, there is a problem in that the energy density relative to volume is lowered. In addition, since the folding part 339-side outer wall 3333 of the cup part 333 is deformed, the outer appearance of the secondary battery 3 is not elegant, and thus there is a problem in that marketability is also reduced.

Furthermore, as illustrated in FIG. 8, there are problems that a size of the bat ear 35 further increases, and the shape stands out due to the edge high phenomenon. The bat ear 35 is a portion that appears visually while protruding outward from a portion of each of both ends of the folding part 339. When the size of the bat ear 35 is formed to be large, an unnecessary volume of the secondary battery 3 further increases, and thus an error occurs in a design value and an actual value of the shape and size of the secondary battery 3. Therefore, there are problems that, when assembling the secondary batteries 3 to a battery module 5 (not shown), it is not easy to be assembled, and the size of the secondary battery 3 has to be designed to be small from the beginning in consideration of the bat ear 35. Also, since the volume of the secondary battery 3 increases, there is also a problem in that energy density to the volume decreases. Furthermore, there is a problem that, when the secondary battery 3 is accommodated in a housing (not shown) of the battery module, the bat ear 35 greatly spaces the housing from the folding part 339 to deteriorate cooling efficiency of the secondary battery 3.

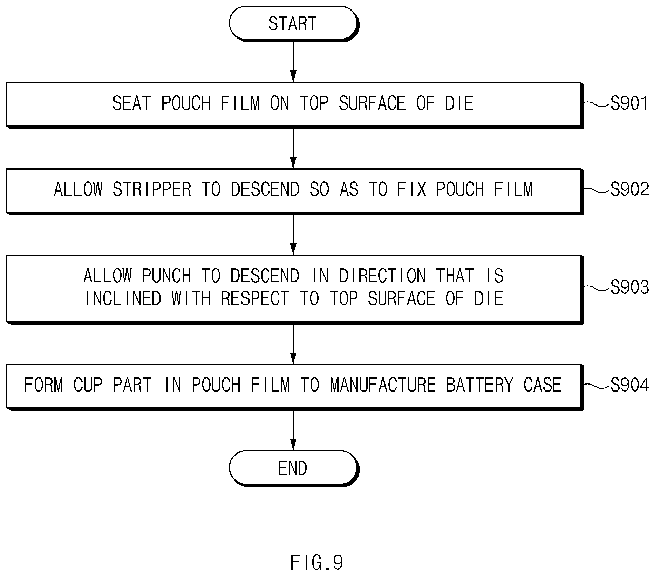

FIG. 9 is a flowchart illustrating a method for manufacturing a battery case 13 by performing press processing on a pouch film 135 according to an embodiment of the present invention.

According to an embodiment of the present invention, an inclination angle of an outer wall 1333 of a cup part 133 from a bottom portion 1332 is further reduced to be formed close to vertical. As a result, since an electrode assembly 10 is disposed to very close to the outer wall 1333 of the cup part 133, an unnecessary volume of the cup part 133 may be reduced. In addition, even when an internal pressure of the cup part 133 is reduced in a degassing process, the outer wall 1333 or the bottom portion 1332 of the cup part 133 may be prevented from being deformed to prevent an edge high phenomenon from occurring. In addition, the bat ear 15 may be reduced in size, and the problem in which the shape of the bat ear 15 stands out may be prevented from occurring.

For this, the method for molding the battery case according to an embodiment of the present invention comprises a process (S901) of seating a pouch film 135 on a top surface of a die 21, a process (S903) of allowing a punch 23 disposed above a molding space 211 recessed inward from the top surface of the die 21 to descend in a direction in which at least a portion of the top surface has an inclination; and a process (S904) of inserting the pouch film 135 into the molding space 211 by using the punch 23 to form a cup part 133 in the pouch film 135.

Hereinafter, contents of each step of the flowchart illustrated in FIG. 9 will be described with reference to FIGS. 10 to 21.

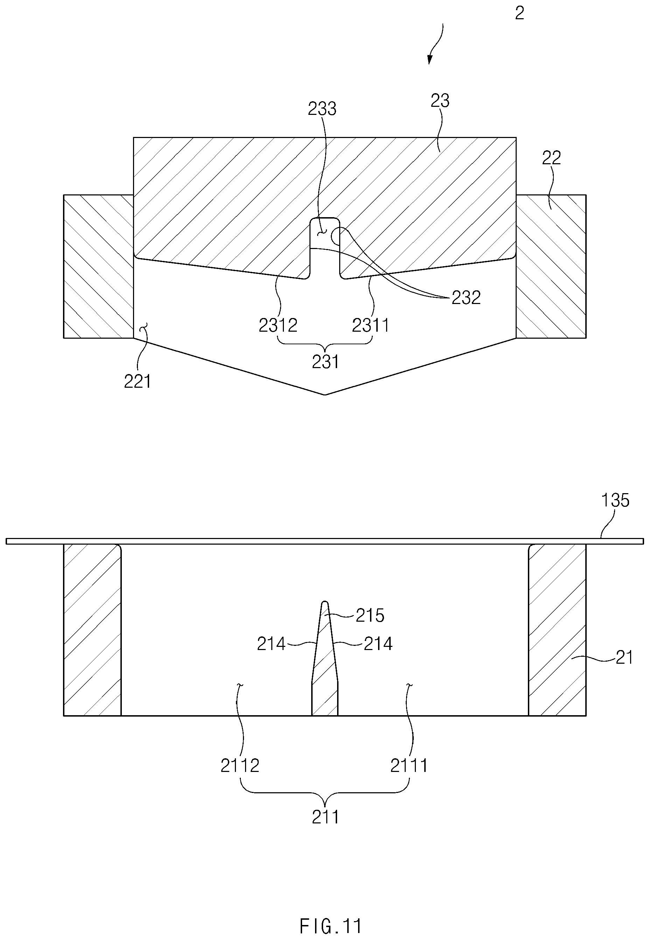

FIG. 10 is a perspective view of an apparatus 2 for molding the battery case according to an embodiment of the present invention, and FIG. 11 is a schematic view of the apparatus 2 for molding the battery case according to an embodiment of the present invention.

As illustrated in FIGS. 10 and 11, the apparatus 2 for molding the battery case according to an embodiment of the present invention comprises: a die 21 on which the pouch film 135 is seated on a top surface thereof, and which comprises the molding space 211 formed to be recessed inward from the top surface; and a punch 23 disposed above the molding space 211 and descending to insert the pouch film 135 into the molding space 211 so as to mold the pouch film 135. The top surface of the die 21 comprises at least one die inclined surface 212. In addition, the apparatus 2 for molding the battery case may further comprise a stripper 22 disposed above the die 21, descending to be in contact with the die 21 with the pouch film 135 therebetween, and fixing the pouch film 135.

The pouch film 135 having flexibility is seated on the top surface of the die 21. Here, the pouch film 135 is seated so that the molding space 211 is disposed in a region in which the cup part 133 is to be formed. The top surface of the die 21 comprises at least one die inclined surface 212 having an inclination with respect to a direction in which the punch 23 descends. In addition, the top surface of the die 21 may further comprise a die horizontal surface 213 extending from at least one end of the die inclined surface 212 and perpendicular to the direction in which the punch 23 descends. The die horizontal surface 213 may be perpendicular to the direction in which the punch 23 descends, but may be formed horizontally with respect to the ground surface. Thus, after the pouch film 135 is molded, a portion of the pouch film 135 seated on the die horizontal surface 213 may be formed horizontally with respect to the ground surface without having an inclination. For example, in order to easily fix the pouch film 135 later, a lattice pattern or fine unevenness may be formed on the top surface of the die 21.

According to an embodiment of the present invention, two cup parts 133 may be draw-molded adjacent to each other on one pouch film 135. That is, the cup parts 133 may be formed in a first case 131 and a second case 132, respectively. For this, as illustrated in FIGS. 10 and 11, the die inclined surface 212 comprises a first die inclined surface 2121 and a second die inclined surface 2122, the first die inclined surface 2121 and the second die inclined surfaces 2122 may be formed to be symmetrical to each other. Here, the symmetrical formation means that a line formed at a point, at which the first die inclined surface 2121 and the second die inclined surface 2122 are in contact with each other, becomes a central axis, and the first die inclined surface 2121 and the second die inclined surface 2122 are formed to be symmetrical to each other with respect to the central axis. In addition, the first die inclined surface 2121 and the second die inclined surface 2122 may have inclinations that are inclined downward as being adjacent to each other, and thus, the die 21 may be formed in a downward concave shape.

The die 21 comprises at least one molding space 211 recessed inward from the top surface of the die 21. The molding space 211 has a shape and size corresponding to those of an outer surface of the cup part 133 to be formed later. Here, the corresponding shape means that, when the cup part 133 is formed by stretching the pouch film 135 by using the punch 23 later, the cup part 133 has a shape that is the same as or similar to that of each of the punch 23 and the molding space 411 of the die 21. Thus, if a transverse section of the cup part 133 has a rectangular shape, a transverse section of the molding space 211 may also have a rectangular shape. If a transverse section of the cup part 133 has a circular shape, a transverse section of the molding space 211 may also have a circular shape. Also, the corresponding size means that, when the punch 23 stretches the pouch film 135, the punch 23 and the pouch film 135 are inserted together into the molding space 211 of the die 21, and thus, the cup part 133 has a size that is finely less than that of the molding space 211 of the die 21. Also, the molding space 211 is formed in a direction parallel to the direction in which the punch 23 descends. Thus, if the punch 23 inserted into the molding space 211 continues to descend in the descending direction, the punch moves along the molding space 211, and the pouch film 135 is molded in a direction in which the punch 23 moves.

According to an embodiment of the present invention, the molding space 211 is formed to be recessed to the inside of the die 21 from the die inclined surface 212 and comprises a first molding space 2111 that is formed to be recessed to the inside of the die 21 from the first die inclined surface 2121 and a second molding space 2112 that is formed to be recessed to the inside of the die 21 from the second die inclined surface 2122. In addition, the die 21 further comprises a partition wall 215 formed between the first molding space 2111 and the second molding space 2112. When the pouch film 135 is molded, a bridge 136 corresponding to the partition wall 215 is formed in the battery case 13.

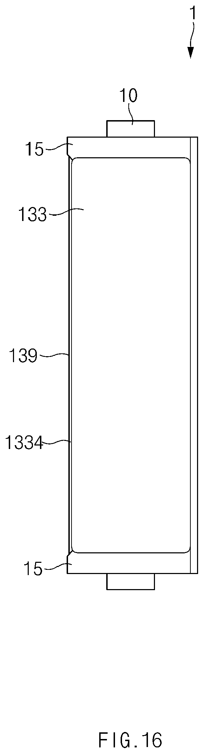

The bridge 136 may serve as a reference portion when the battery case 13 is folded later. When the manufacture of the secondary battery 1 is completed, the bridge 136 may form a folding part 139 (see FIG. 16) at one side of the secondary battery 1. Since the folding part 139 integrally connects the first case 131 and the second case 132 to each other, the number of sides 134 to be sealed may be reduced when a sealing process is performed later. Thus, a process rate may be improved, and the number of sealing processes may be reduced. Here, as a width of the folding part 139 decreases, a space between the outer wall 1333 of the cup part 133 and the electrode assembly 10 may also decrease. Thus, since the entire volume of the secondary battery 1 is reduced, the energy density relative to the volume may increase.

Since the width of the folding part 139 is proportional to a thickness of the bridge 136, and the bridge 136 is formed to correspond to the partition wall 215, the thickness of the bridge 136 is proportional to the thickness of the partition wall 215. Therefore, when the pouch film 135 is molded, the thickness of the bridge 136 may be minimized, and for this, the thickness of the partition wall 215 may be minimized. However, if the partition wall 215 is formed to have an excessively high height in a thin state, the partition wall 215 may be damaged in the drawing-molding process. Particularly, according to the related art, the die 21 has the bottom, but in this case, there is a problem that, when the punch 23 molds the pouch film 135, a gas existing between the pouch film 135 and the molding space 211 is not discharged. Therefore, recently, the bottom of the die 21 may be removed so that the gas existing between the pouch film 135 and the molding space 211 is easily discharged, but there is a problem that the height of the partition wall 215 is excessively high. Therefore, according to an embodiment of the present invention, as illustrated in FIG. 11, the partition wall 215 may have a thickness that gradually increases toward a lower portion thereof. That is, at least a portion of a cross-section of the partition wall 215 may have a substantially triangular shape, and an inner wall 214 of the molding space 211 formed in the partition wall 215 may have an inclination. The exact inclination of the inner wall 214 of the molding space 211 formed in the partition wall 215 may be experimentally determined by a thickness of an upper portion of the partition wall 215, the material of the partition wall 215, the pressure of the punch 23, and the depth of the cup part 133 to be formed.

However, the present invention is not limited thereto, and an upper portion of the partition wall 215 may be maintained to a minimized thickness, and a reinforcing part (not shown) that has a thickness greater than that of the partition wall 215 may be formed at a lower portion of the partition wall 215. The reinforcing part may be formed to be deeper than a depth of the cup part 133 to be formed in the battery case 13 and may be formed at a position at which the partition wall 215 is not damaged. An exact position of the reinforcing part may be experimentally determined according to the thickness of the upper portion of the partition wall 215, a material of the partition wall 215, a pressure of the punch 23, and the depth of the cup part 133 to be formed. As a result, strength of the partition wall 215 may increase to prevent the partition wall 215 from being damaged in the drawing-molding process.

The stripper 21 is disposed above the die 21 to descend when the pouch film 135 is seated on the top surface of the die 21. Also, the stripper 21 contacts the die 21 with the pouch film 135 therebetween and presses the pouch film 135 upward to fix the pouch film 134. Here, the contact of the stripper 22 and the die 21 with the pouch film 135 therebetween means that the components are not directly contact each other but indirectly contact each other through the pouch film 135. When the pouch film 135 is molded later using the punch 23, the stripper 22 uniformly presses the pouch film 135 to uniformly disperse stretching force applied to the pouch film 135.

As a result, a bottom surface of the stripper 22 contacts the top surface of the pouch film 135 when the pouch film 135 is fixed. Thus, the bottom surface of the stripper 22 may have a shape corresponding to the top surface of the die 21. That is, since the top surface of the die 21 comprises at least one die inclined surface 212 and the die horizontal surface 213 extending from at least one end of the die inclined surface 212, the bottom surface of the stripper 22 comprises at least one stripper inclined surface 222, which is in contact with the die inclined surface 212 and has the same inclination as the die inclined surface 211, and a stripper horizontal surface 223, which is in contact with the die horizontal surface 213 and extends from at least one end of the stripper inclined surface 222.

As a result, a bottom surface of the stripper 22 contacts the top surface of the pouch film 135 when the pouch film 135 is fixed. In addition, in order to easily fix the pouch film 135 later, a lattice pattern or fine unevenness may be formed on a bottom surface of the stripper 22.

According to an embodiment of the present invention, the die inclined surface 212 comprises a first die inclined surface 2121 and a second die inclined surface 2122 that are formed to be symmetrical to each other. Thus, the stripper inclined surface 222 also comprises a first stripper inclined surface 2221 and a second stripper inclined surface 2222. The first stripper inclined surface 2221 is in contact with the first die inclined surface 2121 with the pouch film 135 therebetween, and the second stripper inclined surface 2222 is in contact with the second die inclined surface 2122 with the pouch film 135 therebetween. For this, the first stripper inclined surface 2221 may have the same inclination as the first die inclined surface 2121, and the second stripper inclined surface 2222 may have the same inclination as the second die inclined surface 2122. The first stripper inclined surface 2221 and the second stripper inclined surface 2222 may also be formed to be symmetrical to each other and may have inclinations that are inclined downward toward the center.

The punch 23 is disposed above the molding space 211 of the die 21 and descends to insert the pouch film 135 into the molding space 211so as to mold the pouch film 135. The punch 23 descends at a predetermined pressure and speed. Then, while being inserted into the molding space 211 of the punch 23, the molding part 231 of the punch 23 is in direct contact with the top surface of the pouch film 135 seated on the die 21 to apply a pressure to the pouch film 135 so as to stretch the pouch film 135. Thus, the cup part 133 may be formed in the pouch film 135 to manufacture the pouch. A through-part 221 is formed at an approximate center of the stripper 22. Also, the punch 23 passes through the stripper 22 through the through-part 221 to move vertically. When the punch 23 moves vertically, the through-part 221 has a shape and size corresponding to those of the punch 23 so that an inner wall of the through-part 221 guides the punch 23. Here, that the shapes of the through-part 221 and the punch 23 correspond to each other means that the through-part 221 and the punch 23 have the same as or similar to each other so that the punch 23 easily move upward and downward through the through-part 221. Also, the corresponding size means that the through-part 221 has a size finally greater than that of the punch 23. If the size of the through-part 221 is equal to or less than that of the punch 23, the punch 23 may not move vertically through the through-part 221, or the punch 23 may not easily move vertically by frication with an inner wall of the through-part 221. On the other hand, if the size of the through-part 221 is too large, the inner wall of the through-part 221 may not guide the punch 23, and thus, the punch 23 may be separated from the fixed position. Thus, it is preferable that the through-part 221 has a size at which the punch 23 is inserted into the through-part 221 to easily move vertically, but is not separated from the fixed position. Actually, the through-part 221 may be determined experimentally according to the size and shape of the cup part 133 to be formed.

Also, the punch 23 has a shape and size corresponding to those of the molding space 211 of the die 21. Here, that the shapes of the punch 23 and the molding space 211 correspond to each other means that the punch 23 and the molding space 211 of the die 21 have the same as or similar to each other, and when the pouch film 135 is stretched to form the cup part 133, the cup part 133 has a shape that is the same as or similar to that of each of the punch 23 and the molding space 411 of the die 21. Thus, if the punch 23 has a rectangular shape, the molding space 211 of the die 21 may also have a rectangular shape, and the cup part 133 may also have a rectangular shape. If the punch part 23 has a circular shape, the molding space 211 of the die 21 may also have a circular shape, and the cup part 133 may also have a circular shape. Also, that the corresponding size means that the punch 21 has a size that is finely less than the molding space 211 of the die by a thickness of the pouch film 135 because the punch 23 is inserted into the molding space 211 of the die 21 together with the pouch film 135 to stretch the pouch film 135.

According to an embodiment of the present invention, as described above, the molding space 211 of the die 21 comprises a first molding space 2111 and a second molding space 2112, and the die 21 further comprises a partition wall 215 formed between the first molding space 2111 and the second molding space 2112. Therefore, since the punch 23 has a shape corresponding to the shape of the die 21, the molding part 231 of the punch 23 comprises a first molding part 2311, which inserts the pouch film 135 into the first molding space 2111, and a second molding part 2312, which inserts the pouch film 135 into the second molding space 2112. A groove into which the partition wall 215 is inserted is formed in a position corresponding to the partition wall 215 of the die 21 between the first molding part 2311 and the second molding part 2312.

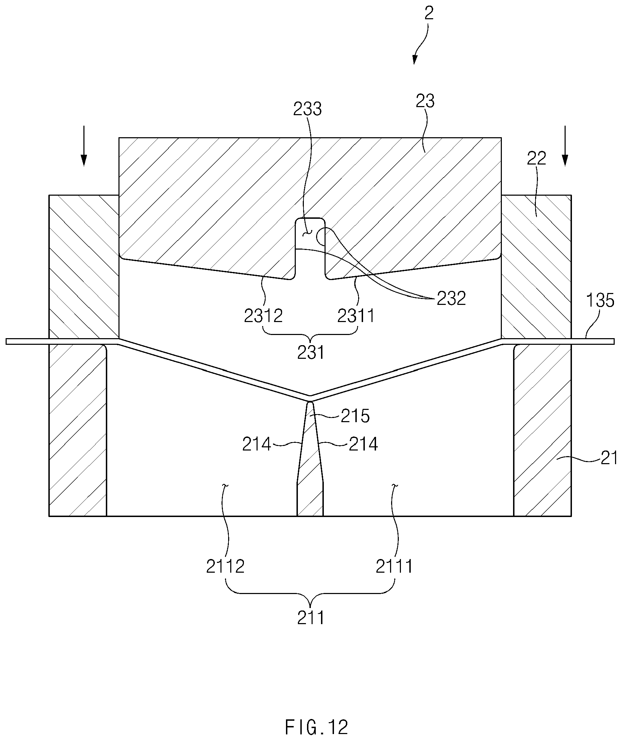

FIG. 12 is a schematic view illustrating a state in which the stripper descends according to an embodiment of the present invention.

When the pouch film 135 is seated on the top surface of the die 21 (S901), the stripper 22 descends (S902), as illustrated in FIG. 12. When the top surface of the pouch film 135 contacts the bottom surface of the stripper 22, the stripper 22 and the die 22 contact each other with the pouch film 135 therebetween. Also, the stripper 22 presses the pouch film 135 upward to fix the pouch film 134. Thus, the stripper 22 uniformly presses the pouch film 135 to uniformly disperse the stretching force applied to the pouch film 135 when the cup part 133 is formed later.

Here, the stripper inclined surface 222 and the die inclined surface 212 are in contact with each other with the pouch film 135 therebetween, and the stripper horizontal surface 223 and the die horizontal surface 213 are in contact with each other with the pouch film 135 therebetween. Thus, as illustrated in FIG. 12, the pouch film 135 in a region in which the stripper inclined surface 222 and the die inclined surface 212 are in contact with each other is formed to have an inclination, and the pouch film 135 in a region in which the stripper horizontal surface 223 and the die horizontal surface 213 are in contact with each other is formed horizontally without an inclination.

Particularly, according to an embodiment of the present invention, the die inclined surface 212 comprises a first die inclined surface 2121 and a second die inclined surface 2122 that are formed to be symmetrical to each other. In addition, the first die inclined surface 2121 and the second die inclined surface 2122 may have inclinations that are inclined downward as being adjacent to each other. Therefore, as illustrated in FIG. 12, both sides of the pouch film 135 in the region in which the stripper inclined surface 222 and the die inclined surface 212 are in contact with each other are symmetrical to each other and may have inclinations that are inclined downward toward the center.

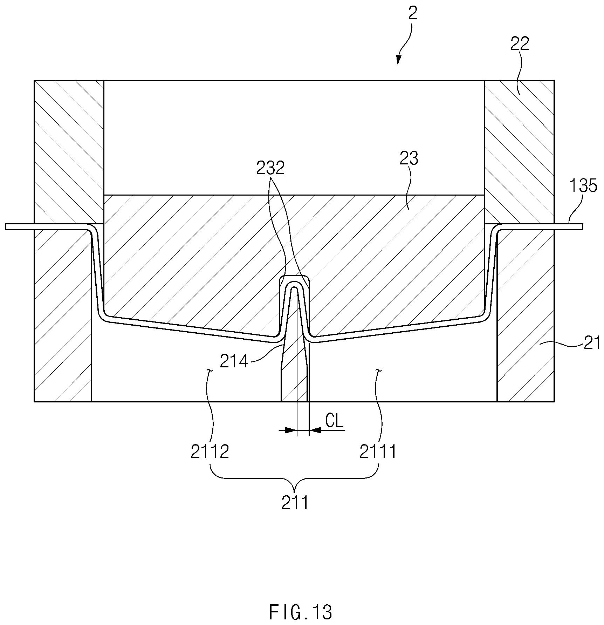

FIG. 13 is a schematic view illustrating a state in which the punch 23 descends according to an embodiment of the present invention.

When the stripper 22 fixes the pouch film 135, as illustrated in FIG. 13, the punch 23 descends in a direction that is inclined with respect to the top surface of the die 21, in particular, the die inclined surface 212 (S903). Then, the punch 23 is inserted into the molding space 211 together with the pouch film 135, and the pouch film 135 is stretched (S903). As a result, the pouch film 135 may be molded to form the cup part 133 (S904). Thereafter, when the punch 23 and the stripper 22 ascend again, the pouch film 135 in which the cup part 133 is formed may be taken out, and thus, the pouch-type battery case 13 according to an embodiment of the present invention may be manufactured.

As described above, the molding part 231 of the punch 23 is in direct contact with the top surface of the pouch film 135 seated on the die 21 to apply a pressure, thereby stretching the pouch film 135. Also, when the pouch film 135 is molded to form the cup part 133, the bottom portion 1332 of the cup part 133 is formed in a shape corresponding to the molding portion 231 of the punch 23. Here, the molding part 231 of the punch 23 may also be formed to have an inclination, in particular, may have an inclination having the same inclination angle as that of the die inclined surface 212. Therefore, when the pouch film 135 is molded to manufacture the battery case 13, the bottom portion 1332 of the cup part 133 of the battery case 13 may have the inclination having the same inclined angle as that of the pouch film 135 in the region in which the stripper inclined surface 222 and the die inclined surface 212 are in contact with each other, and thus, the bottom portion 1332 may be parallel to the pouch film 135. However, the present invention is not limited thereto, and the molding part 231 of the punch 23 may have an inclination angle different from that of the die inclined surface 212. In this case, the bottom portion 1332 of the cup part 133 of the battery case 13 may be formed to have an inclination having an inclined angle different from that of the pouch film 135 in the region in which the stripper inclined surface 222 and the die inclined surface 212 are in contact with each other.

According to an embodiment of the present invention, since the die inclined surface 212 comprises the first die inclined surface 2121 and the second die inclined surface 2122, the molding part 231 of the punch 23 may also comprise the first molding part 2311 and the second molding part 2312. The first molding part 2311 of the punch 23 is inserted into the first molding space 2111 of the die 21 to stretch the pouch film 135. Then, the cup part 133 may be formed in the first case 131. Here, the bottom portion 1332 of the cup part 133 formed in the first case 131 may have the inclination having the same inclined angle as that of the pouch film 135 in the region in which the first die inclined surface 2121 and the first stripper inclined surface 2221 are in contact with each other, and thus, the bottom portion 1332 may be parallel to the pouch film 135. In addition, the second molding part 2312 of the punch 23 is inserted into the second molding space 2112 of the die 21 to stretch the pouch film 135. As a result, the cup part 133 may be formed in the second case 132. Here, the bottom portion 1332 of the cup part 133 formed in the second case 132 may have the inclination having the same inclined angle as that of the pouch film 135 in the region in which the second die inclined surface 2122 and the second stripper inclined surface 2222 are in contact with each other, and thus, the bottom portion 1332 may be parallel to the pouch film 135.

Thus, when the pouch film 135 is molded to manufacture the battery case 13, the bottom portion 1332 of the cup part 133 formed in each of the first case 131 and the second case 132 may also formed to be symmetrical to each other and may have an inclination that is inclined downward toward the center.

When the punch 23 descends and is inserted into the molding space 211 of the die 21, the partition wall 215 of the die 21 may be inserted into a groove formed between the first molding part 2311 and the second molding part 2312 of the punch 23. Thus, when the pouch film 135 is molded, a bridge 136 corresponding to the partition wall 215 of the die 21 may be formed on the battery case 13. The bridge 136 is formed to correspond to the partition wall 215 of the die 21, and a punch edge 1334 is formed to correspond to an edge of the punch 23. Also, a clearance CL that is a horizontal distance between an inner wall 214 of the molding space 211 of the die 21 and an outer wall 232 of the punch 232 exists between the inner wall 214 of the molding space 211 of the die 21 and the outer wall 232 of the punch 232. Therefore, as illustrated in FIG. 13, the clearance CL may be referred to as a horizontal distance between the bridge 136 and the punch edge 1334 in the battery case 13, and the outer wall 1333 of the cup part 133 may be formed to have an inclination by the clearance CL.

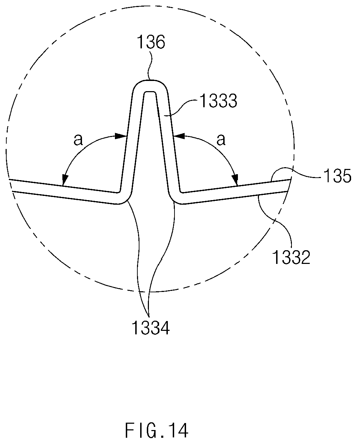

FIG. 14 is a partial enlarged view illustrating the punch edge 1334 of the cup part 133 according to an embodiment of the present invention.

As illustrated in FIG. 14, although the outer wall 1333 of the cup part 133 itself is formed to have the inclination, according to an embodiment of the present invention, the bottom portion 1332 of the cup part 133 is also formed to have an inclination. Thus, an inclined angle a from the bottom portion 1332 of the outer wall 1333 of the cup part 133 may be further reduced to be formed close to vertical so as to have the inclination angle a between approximately 90° and approximately 95°, furthermore, between 90° and 93°.

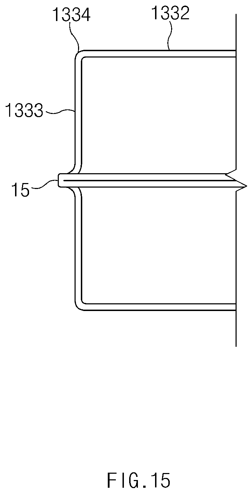

FIG. 15 is a partial enlarged view illustrating the folding part 139 of the secondary battery 1 according to an embodiment of the present invention.

According to an embodiment of the present invention, the inclination angle a from the bottom portion 1332 of the outer wall 1333 of the cup part 133 may be formed close to the vertical. As a result, since the electrode assembly 10 is disposed very close to the outer wall 1333 of the cup part 133, an unnecessary volume of the cup part 133 is reduced. Therefore, even if the internal pressure of the cup part 133 is reduced by performing the degassing process, it is possible to prevent the outer wall 1333 or the bottom portion 1332 of the cup part 133 from being deformed. That is, as illustrated in FIG. 15, it is possible to prevent the edge high phenomenon from occurring, and thus, the energy density relative to volume may not decrease.

FIG. 16 is a schematic top view illustrating the secondary battery 1 according to an embodiment of the present invention.

As described above, a bat ear 15 is a portion that appears visually while protruding outward from a portion of each of both ends of the folding part 139 in the secondary battery 1. Particularly, the battery case 13 is formed by drawing the pouch film 135 and, in this case, not only the cup part 133 is limitedly stretched, but also peripheral sides 134 of the cup part 133 are also finely stretched as a whole. Accordingly, when the bridge 136 is folded, the finely stretched portions of the sides 134 are accumulated and thus appear visually while protruding outward from both ends of the folding part 139. This is called the bat ear 15.

According to an embodiment of the present invention, since an edge high phenomenon is prevented from occurring, a size of the bat ear 15 may be reduced, and the problem that the shape of the bat ear 15 stands out may be prevented from occurring. Accordingly, the secondary batteries 1 may be easily assembled into a battery module, and an unnecessary volume of the secondary battery 1 is reduced, and thus the energy density relative to the volume may increase. In addition, when the secondary battery 1 is accommodated in the housing of the battery module, the size of the bat ear 15 may be reduced, a gap between the housing and the folding part 139 may be reduced, and cooling efficiency of the secondary battery 1 may also be improved.

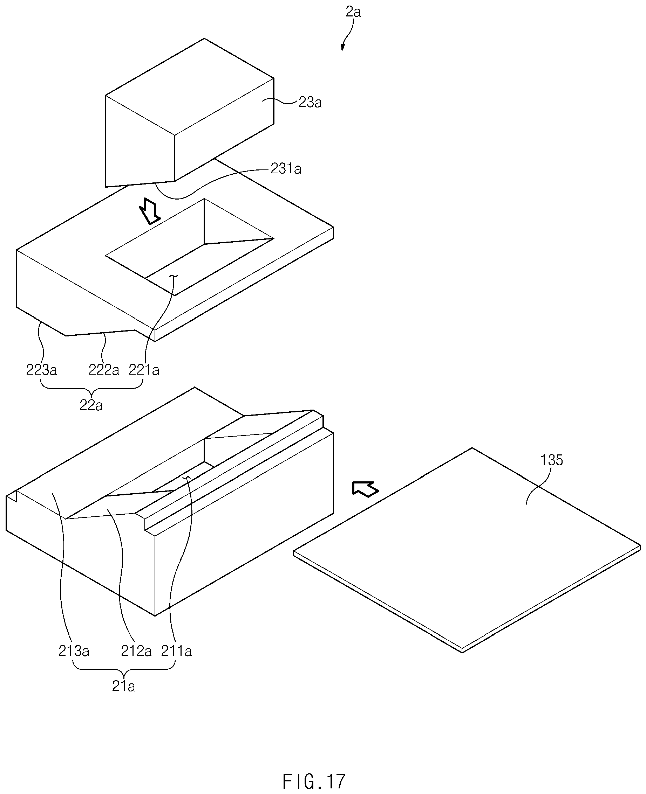

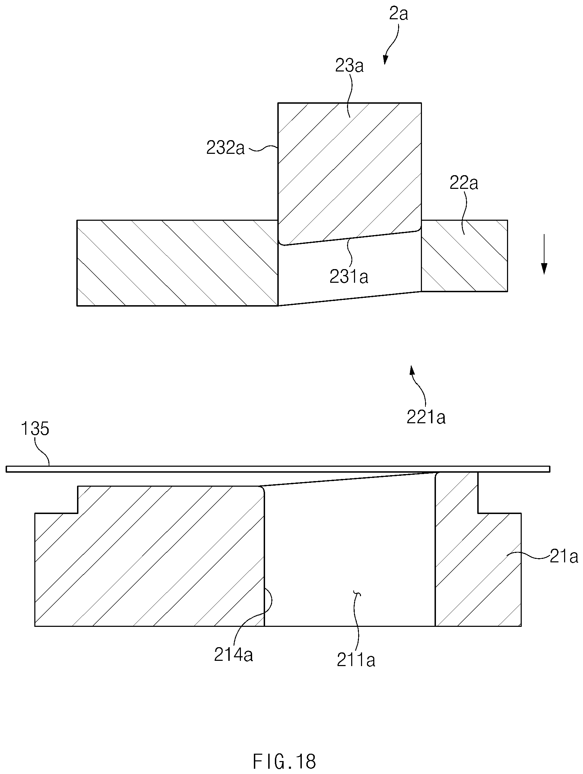

FIG. 17 is a perspective view of an apparatus 2a for molding a battery case according to another embodiment of the present invention, and FIG. 18 is a schematic view of the apparatus 2a for molding the battery case according to another embodiment of the present invention.

According to an embodiment of the present invention, the two cup parts 133 are formed adjacent to each other in one pouch film 135, and thus, the cup parts 133 may be formed in the first case 131 and the second case 132, respectively. However, according to another embodiment of the present invention, only one cup part 133 may be formed in one pouch film 135, and thus, the cup part 133 may be formed only in the first case 131. For this, as illustrated in FIG. 17, a top surface of a die 21a may comprise only one die inclined surface 212a that is inclined with respect to a direction in which a punch 23a descends. In addition, a top surface of the die 21a may further comprise a plurality of die horizontal surfaces 213a respectively extending from both ends of the die inclined surface 212a and perpendicular to the direction in which the punch 23a descends.

Since the top surface of the die 21a comprises only the one die inclined surface 212a, the die 21a may comprise only one molding space 211a that is recessed inward from the top surface of the die 21a. Therefore, according to another embodiment of the present invention, the die 21a may not comprise a partition wall, and a bridge may not be formed on the battery case 13a manufactured by molding the pouch film 135.

When the pouch film 135 is fixed by a bottom surface of the stripper 22a, the bottom surface of the stripper 22a is in contact with a top surface of the pouch film 135. Therefore, according to another embodiment of the present invention, the stripper 22a may also comprises only one stripper inclined surface 222a having the same inclination as the inclined surface of the die 21a and may further comprise a plurality of stripper horizontal surfaces 223a that are in contact with a horizontal surface of the die 21a and extend from both ends of the stripper inclined surface 222a.

According to another embodiment of the present invention, since the die 21a comprises only one molding space 211a, the punch 23a may also comprise only one molding part 231a that inserts the pouch film 135 into the molding space 211a. Also, since the die 21a does not comprise a partition wall, a groove into which the partition wall is inserted may not be formed even in the punch 23a.

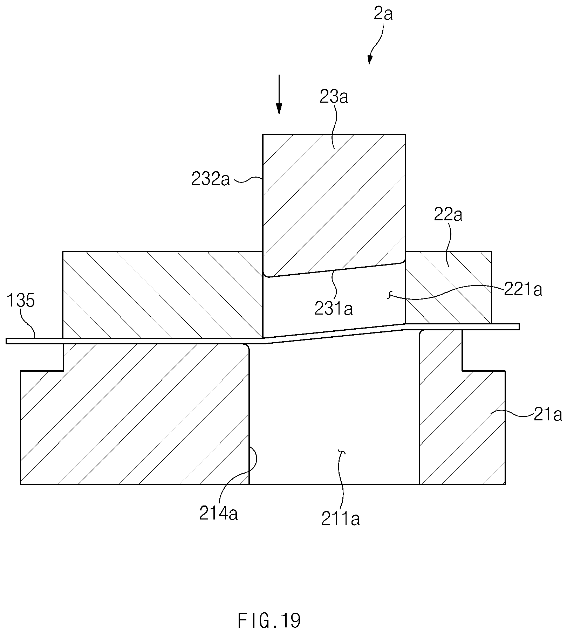

FIG. 19 is a schematic view illustrating a state in which a stripper 22a descends according to another embodiment of the present invention.

When the pouch film 135 is seated on a top surface of the die 21a (S901), as illustrated in FIG. 19, the stripper 22 descends (S902). When the top surface of the pouch film 135 contacts the bottom surface of the stripper 22, the stripper 22 and the die 22 contact each other with the pouch film 135 therebetween. Also, the stripper 22 presses the pouch film 135 upward to fix the pouch film 134.

According to another embodiment of the present invention, since the die 21a comprises only one die inclined surface 212a, and the stripper 22a comprises only one stripper inclined surface 222a, only one inclined area of the pouch film 135 may be formed. Also, since the die 21a comprises a plurality of die horizontal surfaces 213a, and the stripper 22a comprises a plurality of stripper horizontal surfaces 223a, a region in which the pouch film 135 is horizontal may be formed in plurality.

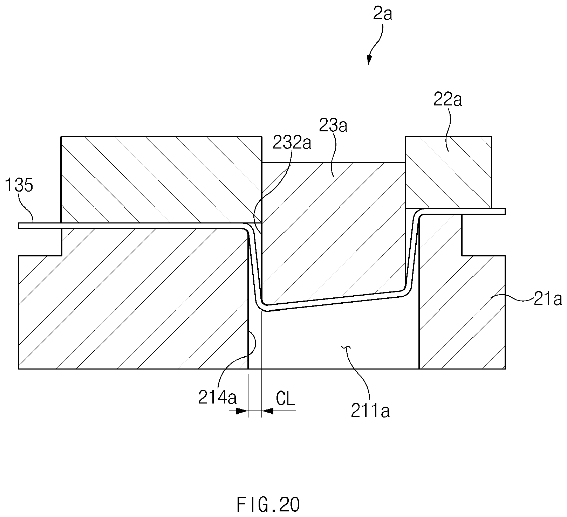

FIG. 20 is a schematic view illustrating a state in which the pouch 23a descends according to another embodiment of the present invention.

When the stripper 22a fixes the pouch film 135, as illustrated in FIG. 20, the punch 23a descends in a direction that is inclined with respect to a top surface of the die 21a, in particular, the die inclined surface 212a (S903). As a result, the punch 23a is inserted into the molding space 211a together with the pouch film 135, and the pouch film 135 is stretched (S903). Thus, the pouch film 135 may be molded to form the cup part 133a (S904). Thereafter, when the punch 23a and the stripper 22a ascend again, the pouch film 135 in which the cup part 133a is formed may be taken out, and thus, the pouch-type battery case 13a according to an embodiment of the present invention may be manufactured.

According to another embodiment of the present invention, the molding part 231a of the punch 23a may be inserted into the molding space 211a of the die 21a to stretch the pouch film 135, thereby forming the cup part 133a in the first case 131, but the cup part may not be formed in the second case 132.

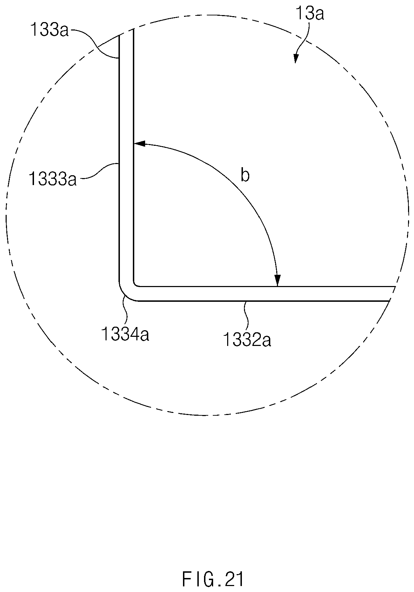

FIG. 21 is a partial enlarged view illustrating a punch edge 1334a of the cup part 133a according to another embodiment of the present invention.

As illustrated in FIG. 21, although an outer wall 1333a of the cup part 133a itself is formed to have an inclination, according to an embodiment of the present invention, a bottom portion 1332a of the cup part 133a is also formed to have an inclination. Thus, an inclined angle b from the bottom portion 1332a of the outer wall 1333a of the cup part 133a may be further reduced to be formed close to vertical so as to have the inclination angle b between approximately 90° and approximately 95°, furthermore, between 90° and 93°.

Referring to FIGS. 1, 14, and 16, the battery case according to an embodiment of the present invention comprises a cup part 133 formed in at least one of the first case 131 or the second case 132 and having an outer wall 1333 along an edge of one surface of the bottom portion 1332 to provide an accommodation space for an electrode assembly and a folding part 139 folded at one side of the cup part 133 to integrally connect the first case 131 to the second case 132.

The outer wall 1333 may comprise a first outer wall formed at a side of the folding part 139 on the edge of one surface of the bottom portion 1332, a second outer wall formed at an opposite side of the first outer wall, a third outer wall formed to connect the first outer wall to the second outer wall, and a fourth outer wall formed at an opposite side of the third outer wall, and an inner inclined angle between the first outer wall and the bottom portion 1332 may be formed in a range of 90° to 95°.

Here, the folding part 139 means that, when the apparatus for molding the pouch comprises a partition wall 215, a bridge corresponding to the partition wall 215 may be formed, and the bridge may be a reference portion when the battery case 13 is later folded. That is, when the manufacture of the secondary battery 1 is completed, the bridge may form the folding part 139 at one side of the secondary battery 1, and thus, it may be equally understood as being formed at a side of the bridge on the edge of one surface of the bottom portion 1332.

However, when the cup part 133a is formed in only one of the first case 131 or the second case 132, a separate bridge does not exist. In this case, it may be understood that the first outer wall is formed at a side of the folding part on the edge of one surface of the bottom portion.

Thus, an inclination angle a from the bottom portion 1332 of the first outer wall, which is the outer wall of the cup part 133 formed at the side of the folding part 139, may be further reduced to be formed close to vertical, and thus, the electrode assembly may be disposed very close to the outer wall of the cup part to reduce the unnecessary volume of the cup part.

An inner inclination angle between the second outer wall and the bottom portion 1332 may be greater than the inner inclination angle a between the first outer wall and the bottom portion 1332.

Also, the inner inclination angle between the second outer wall and the bottom portion 1332 may be greater at least 10° or more than the inner inclination angle a between the first outer wall and the bottom portion 1332.

Those with ordinary skill in the technical field of the present invention pertains will be understood that the present invention can be carried out in other specific forms without changing the technical idea or essential features. Therefore, the above-disclosed embodiments are to be considered illustrative and not restrictive. Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

**[Description of the Symbols]**

| | | | |
|---|---|---|---|
| 1: | Secondary battery | 2: | Molding apparatus |
| 10: | Electrode assembly | 11: | Electrode tab |
| 12: | Electrode lead | 13: | Battery case |
| 14: | Insulating part | 15: | Bat ear |
| 21: | Die | 22: | Stripper |
| 23: | Punch | 11: | Positive electrode tab |
| 112: | Negative electrode tab | 121: | Positive electrode lead |
| 122: | Negative electrode lead | 131: | First case |
| 132: | Second case | 133: | Cup part |
| 134: | Side | 135: | Pouch film |
| 136: | Bridge | 137: | Degassing part |
| 139: | Folding part | 211: | Molding space |
| 212: | Die inclined surface | 213: | Die horizontal |
| | surface | | |
| 214: | Inner wall | 215: | Partition wall |
| 221: | Through-part | 222: | Stripper inclined surface |
| 223: | Stripper horizontal surface | 231: | Molding part |
| 232: | Outer wall | 1331: | Accommodation space |
| 1332: | Bottom portion | 1333: | Outer wall |
| 1334: | Punch edge | 1351: | Sealant layer |
| 1352: | Moisture barrier layer | 1353: | Surface protection layer |
| 2111: | First molding space | 2112: | Second molding space |
| 2121: | First die inclined surface | 2122: | Second die inclined surface |
| 2151: | Reinforcing part | 2221: | First stripper inclined surface |
| 2222: | Second stripper inclined surface | 2311: | First molding part |
| 2312: | Second molding part | | |

## Claims

1. An apparatus for molding a battery case, the apparatus comprising:
a die having a top surface, on which a pouch film is seated, and comprising at least one molding space formed to be recessed inward from the top surface; and
a punch disposed above the molding space and descending to insert the pouch film into the molding space so as to mold the pouch film,
wherein the top surface of the die comprises at least one die inclined surface.

2. The apparatus of claim 1, wherein the die inclined surface has an inclination that is inclined in a direction in which the punch descends.

3. The apparatus of claim 1, wherein the molding space is formed to be recessed to the inside of the die from the die inclined surface.

4. The apparatus of claim 1, wherein the die inclined surface comprises a first die inclined surface and a second die inclined surface, and
the first die inclined surface and the second die inclined surface are formed to be symmetrical to each other.

5. The apparatus of claim 4, wherein the first die inclined surface and the second die inclined surface are inclinations that are inclined downward as being adjacent to each other.

6. The apparatus of claim 5, wherein the molding space comprises:
a first molding space formed to be recessed to the inside of the die from the first die inclined surface; and
a second molding space formed to be recessed to the inside of the die from the second die inclined surface.

7. The apparatus of claim 6, wherein the die further comprises a partition wall formed between the first molding space and the second molding space.

8. The apparatus of claim 7, wherein the partition wall has a thickness that gradually increases toward a lower portion thereof, and
an inner wall of the molding space formed by the partition wall has an inclination.

9. The apparatus of claim 7, wherein the punch has a groove, into which the partition wall is inserted, at a position corresponding to the partition wall.

10. The apparatus of claim 6, wherein the punch comprises:
a first molding part configured to insert the pouch film into the first molding space; and
a second molding part configured to insert the pouch film into the second molding space.

11. The apparatus of claim 1, wherein the die further comprises a die horizontal surface extending from at least one end of the die inclined surface and perpendicular to a direction in which the punch descends.

12. The apparatus of claim 1, wherein, in the punch, a molding part that is in direct contact with the pouch film has the same inclination as the die inclined surface.

13. The apparatus of claim 1, further comprising a stripper disposed above the die, descending to be in contact with the die with the pouch film therebetween, and configured to fix the pouch film.

14. The apparatus of claim 13, wherein a bottom surface of the stripper comprises at least one stripper inclined surface that is in contact with the die inclined surface and has the same inclination as the die inclined surface.

15. A method for molding a battery case, the method comprising:
seating a pouch film on a top surface of a die;
allowing a punch, which is disposed above a molding space formed to be recessed inward from the top surface of the die, to descend in a direction that is inclined with respect to at least a portion of the top surface; and
inserting the pouch film into the molding space by using the punch to form a cup part in the pouch film.

16. The method of claim 15, wherein, in the allowing of the punch to descend, the top surface of the die comprises at least one inclined surface.

17. A battery case comprising:
a cup part formed in at least one of a first case or a second case and having an outer wall along an edge of one surface of a bottom portion to provide an accommodation space for an electrode assembly; and
a folding part folded at one side of the cup part to integrally connect the first case to the second case,
wherein the outer wall comprises:
a first outer wall formed at a side of the folding part on the edge of the one surface of the bottom portion;
a second outer wall formed at an opposite side of the first outer wall;
a third outer wall formed to connect the first outer wall to the second outer wall; and
a fourth outer wall formed at an opposite side of the third outer wall,
wherein an inner inclined angle between the first outer wall and the bottom portion is formed in a range of 90° to 95°.

18. The battery case of claim 17, wherein an inner inclined angle between the second outer wall and the bottom portion is formed to be greater than that between the first outer wall and the bottom portion.

19. The battery case of claim 18, wherein the inner inclined angle between the second outer wall and the bottom portion is formed to be greater at least 10° or more than that between the first outer wall and the bottom portion.
